## Europäisches Patentamt
## European Patent Office
## Office européen des brevets

(19)

(11) Numéro de publication : **0 140 743**
**B1**

(12)

# FASCICULE DE BREVET EUROPÉEN

(45) Date de publication du fascicule du brevet :
**30.12.86**

(51) Int. Cl.⁴ : **F 15 D  1/02, F 16 L  55/00**

(21) Numéro de dépôt : **84401836.6**

(22) Date de dépôt : **14.09.84**

(54) **Dispositif de stabilisation d'un écoulement polyphasique.**

(30) Priorité : **19.09.83 FR 8314970**

(43) Date de publication de la demande :
**08.05.85 Bulletin 85/19**

(45) Mention de la délivrance du brevet :
**30.12.86 Bulletin 86/52**

(84) Etats contractants désignés :
**DE GB IT NL**

(56) Documents cités :
**EP-A- 0 034 079**
**DE-A- 3 146 921**
**FR-A- 2 065 744**
**FR-A- 2 128 861**
**FR-A- 2 222 560**
**US-A- 4 007 908**
**US-A- 4 150 696**
**Néant**

(73) Titulaire : **INSTITUT FRANCAIS DU PETROLE**
**4, Avenue de Bois-Préau**
**F-92502 Rueil-Malmaison (FR)**

(72) Inventeur : **Arnaudeau, Marcel**
**32, rue Boursault**
**F-75017 Paris (FR)**

EP 0 140 743 B1

# Description

La présente invention concerne un dispositif permettant de maintenir sensiblement stable un écoulement polyphasique sur au moins une portion de sa trajectoire. On entend par écoulement stable un écoulement ayant une structure définie dans le temps et dans l'espace compris dans un domaine donné et dont on peut déterminer les caractéristiques.

L'art antérieur peut être illustré par les demandes de brevets français numéros FR-A-2 128 861, FR-A-2 222 560, FR-A-2 065 744, par la demande de brevet européen numéro EP-A-00 34079, par la demande de brevet allemand numéro DE-A-3 146 921 et par les brevets américains numéros US-A-4 007 908 et US-A-4 150 696.

En outre, l'invention permet éventuellement de générer dans cette portion considérée un écoulement ayant une structure souhaitée bien définie.

En effet, il est connu que la structure de l'écoulement d'un fluide polyphasique, considérée en un point donné, peut évoluer en fonction du temps entre différentes formes et passer d'une forme à une autre forme, notamment du fait des perturbations provenant de l'amont et/ou de l'aval relativement au point considéré.

Ainsi, la présente invention propose un dispositif pour maintenir sensiblement stables les conditions d'écoulement dans une portion d'un écoulement polyphasique. Ce dispositif est caractérisé en ce qu'il comporte au moins deux organes adaptés à arrêter d'éventuelles perturbations dans l'écoulement provenant de l'amont et/ou de l'aval, lesdits organes étant disposés dans l'écoulement de part et d'autre de ladite portion.

L'organe d'arrêt des perturbations peut comporter au moins un élément statique tels des grilles, des diaphragmes etc...

L'organe d'arrêt des perturbations pourra comporter au moins un élément dynamique tel un élément tournant ; cet élément tournant pourra comporter des ailettes.

En outre, cet élément tournant, pourra coopérer avec des éléments statiques comportant, éventuellement, des ailettes, tel un redresseur.

Dans le cas où l'organe d'arrêt des perturbations comporte plusieurs éléments tournants, chacun de ceux-ci pourra, éventuellement, coopérer avec au moins un élément statique tel un redresseur.

L'organe d'arrêt des perturbations pourra être adapté à générer un écoulement ayant une structure prédéterminée.

L'organe d'arrêt des perturbations pourra comporter au moins deux groupes mobiles comportant chacun au moins une ailette, chacun de ces groupes coopérant avec un groupe fixe comportant au moins une ailette et formant un redresseur.

Il est possible selon l'invention d'utiliser deux organes d'arrêt des perturbations, le premier étant situé en amont de ladite portion et le second en aval.

Le premier organe d'arrêt des perturbations pourra comporter trois groupes mobiles comportant chacun au moins une ailette, chacun de ces groupes coopérant avec un groupe fixe comportant au moins une ailette et formant un redresseur.

Le second organe d'arrêt des perturbations pourra comporter deux groupes mobiles, chacun d'eux coopérant avec un groupe fixe.

La présente invention sera mieux comprise et ses avantages apparaîtront à la description qui suit d'un exemple de réalisation, nullement limitatif, illustré par les figures ci-annexées, parmi lesquelles :

la figure 1 présente différentes structures d'écoulement diphasique,

la figure 2 illustre le cas où l'on souhaite isoler une portion de l'écoulement des perturbations aval,

la figure 3 montre une portion de l'écoulement isolée des perturbations amont et aval,

la figure 4 présente un dispositif selon l'invention comportant un élément tournant, et

la figure 5 illustre l'utilisation du dispositif selon l'invention appliqué au cas d'une jonction de deux écoulements polyphasiques.

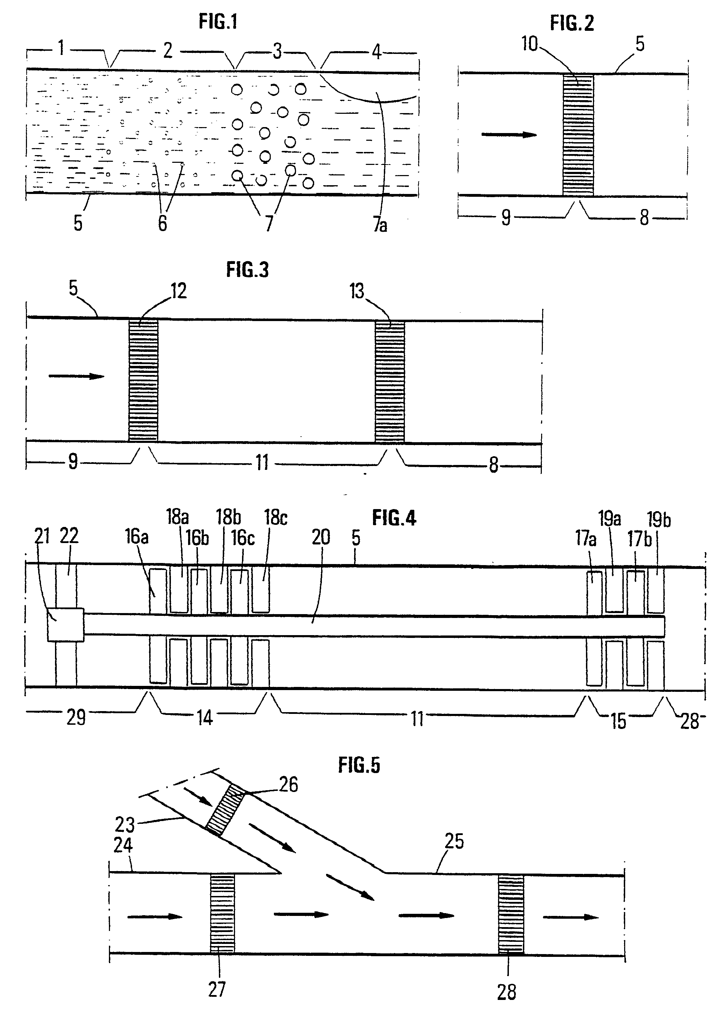

La structure de l'écoulement d'un fluide diphasique comportant une phase liquide et une phase gazeuse, évolue en fonction du temps entre les différentes formes schématiques représentées à la figure 1, ceci dans le cas d'un écoulement dans une canalisation 5.

La référence 1 désigne la structure d'un écoulement pour lequel la phase gazeuse est entièrement dissoute dans la phase liquide.

La référence 2 désigne une structure comportant des bulles de gaz 6 de dimension plus ou moins importante.

La portion de l'écoulement désignée par la référence 3 comporte de grosses bulles de gaz 7 que l'on qualifie également de poches.

Enfin, la référence 4 désigne une portion de l'écoulement dans laquelle on a une importante quantité de gaz dissociée de la phase liquide et qui s'écoule séparément.

Bien entendu dans le cas d'un écoulement réel, on peut avoir la combinaison de ces différentes structures et, le passage de l'une à l'autre, en fonction notamment des perturbations amont et/ou aval.

La figure 2 illustre le cas où l'on désire isoler la partie aval 8 de la canalisation 5 des perturbations provenant de la partie amont 9 de la canalisation 5, telles par exemple, des variations périodiques des pressions, des vitesses, des températures, des tensions interfaciales, etc... Pour ce faire, on interpose un organe d'arrêt des perturbations 10. Cet organe peut comporter un élément statique telle une grille ou un élément tournant. La flèche sur cette figure indique le sens de l'écoulement.

Il est bien évident qu'il est également possible d'utiliser l'invention pour isoler la partie amont 9 des perturbations provenant de la partie aval 8 de la canalisation 5.

D'ailleurs, la figure 3 montre le cas où l'on souhaite isoler une portion 11 des perturbations provenant de l'amont 9 et de l'aval 8 de la canalisation 5. Pour ce faire, on dispose deux organes d'arrêt des perturbations 12 et 13 de part et d'autre de la portion 11 de la canalisation 5.

L'organe d'arrêt des perturbations pouvant entraîner la modification de la structure de l'écoulement diphasique peut comporter, par exemple, une simple grille, ou un diaphragme.

En outre, cet organe peut permettre de générer une structure stable de l'écoulement situé en son aval.

L'organe d'arrêt des perturbations pourra comporter un élément tournant.

La figure 4 illustre le cas où l'écoulement se trouvant dans la portion 11 de la canalisation 5 est isolé des perturbations amont et aval, respectivement par des organes d'arrêt des perturbations 14 et 15 qui comportent des éléments tournants.

Dans le cas de cette figure 4 le premier organe d'arrêt des perturbations 14 comporte trois groupes d'ailettes mobiles 16a, 16b et 16c comportant chacun au moins une ailette et de préférence deux ou plus. Chacun de ces groupes d'ailettes mobiles coopère respectivement avec un groupe d'ailettes fixes 18a, 18b et 18c formant redresseur, comportant chacun au moins une ailette et de préférence plusieurs.

L'organe d'arrêt des perturbations aval comporte deux groupes d'ailettes mobiles 17a et 17b comportant chacun au moins une ailette et de préférence deux ou plus. Chacun de ces groupes d'ailettes mobiles coopère respectivement avec un groupe d'ailettes fixes 19a et 19b formant redresseur, comportant chacun au moins une ailette et de préférence plusieurs.

Les ailettes mobiles 16a, 16b, 16c, 17a et 17b sont solidaires d'un axe 20 qui est entraîné par un moteur 21 fixé à la canalisation 5 par l'intermédiaire de bras 22.

Bien entendu, on ne sortira pas du cadre de la présente invention si chacun des organes d'arrêt des perturbations 14 ou 15 comporte son propre moteur, ou si l'un de ces deux organes 14 ou 15 ne comporte pas d'élément tournant.

Il est à noter que si dans la portion 11 on modifie la structure de l'écoulement, l'organe d'arrêt des perturbations 13 ou 15 pourra établir la structure d'écoulement souhaitée. Ainsi il isolera la portion aval 28 des perturbations provenant de la portion 11. Il en est de même de l'organe d'arrêt des perturbations 14 relativement à la portion amont 29.

La figure 5 représente le cas d'une jonction entre deux canalisations 23 et 24 pour ne former qu'une seule canalisation 25.

Dans ce cas, il est possible d'installer des organes d'isolation des perturbations 26, 27 et 28 sur chacune des branches de la jonction.

Bien entendu, il est possible d'appliquer l'invention au cas d'une séparation des canalisations et quel que soit le nombre de branches de canalisations qui se rejoignent et/ou se séparent. Certaines de ces canalisations pourront, le cas échéant, ne pas être munies de dispositif d'arrêt des perturbations, notamment si elles contiennent des écoulements qui ne sont pas à l'origine de perturbations.

Le profil des ailettes mobiles pourra être le même que celui défini dans la demande de brevet FR-A-2 471 501.

Il est à noter que dans le cas où l'on utilise un nombre limité de ces ailettes, par exemple 2 ou 3, elles ne servent pas à élever la pression mais, essentiellement, à stabiliser l'écoulement.

**Revendications**

1. Dispositif pour maintenir sensiblement stables les conditions d'écoulement dans une portion (11) d'un écoulement polyphasique, caractérisé en ce qu'il comporte au moins deux organes (12 et 13) adaptés à arrêter d'éventuelles perturbations dans l'écoulement provenant de l'amont et/ou de l'aval, lesdits organes (12 et 13) étant disposés dans l'écoulement de part et d'autre de ladite portion (11).

2. Dispositif selon la revendication 1, caractérisé en ce qu'au moins l'un desdits organes (12 ou 13) d'arrêt des perturbations comporte au moins un élément statique tel une grille ou un diaphragme.

3. Dispositif selon la revendication 1, caractérisé en ce qu'au moins l'un desdits organes (12 ou 13) d'arrêt des perturbations comporte au moins un élément tournant (16a, 16b, 16c).

4. Dispositif selon la revendication 3, caractérisé en ce que ledit élément tournant comporte des ailettes (16a, 16b, 16c).

5. Dispositif selon l'une des revendications 3 ou 4, caractérisé en ce que ledit élément tournant (16a, 16b, 16c) coopère avec des éléments statiques (18a, 18b, 18c).

6. Dispositif selon la revendication 5, caractérisé en ce que ledit élément statique comporte des ailettes (18a, 18b, 18c).

7. Dispositif selon l'une des revendications 3 à 6, caractérisé en ce que l'organe d'arrêt des perturbations (14 ou 15) comporte plusieurs éléments tournants (16a, 16b, 16c ou 17a, 17b), chacun de ceux-ci coopérant éventuellement avec au moins un élément statique (18a, 18b, 18c ou 19a, 19b), tel un redresseur.

8. Dispositif selon l'une des revendications précédentes, caractérisé en ce qu'au moins l'un desdits organes (10, 12, 13, 14 ou 15) d'arrêt des perturbations est adapté à produire un écoulement polyphasique ayant une structure prédéterminée (6, 7 ou 8).

9. Dispositif selon la revendication 7, caractérisé en ce que ledit organe (15) d'arrêt des perturbations comporte au moins deux groupes mobiles (17a, 17b) comportant chacun au moins une ailette (17a, 17b), chaque groupe mobile coopérant avec un groupe fixe (19a, 19b) comportant au moins une ailette (19a, 19b) et formant redresseur.

10. Dispositif selon la revendication 9, caractérisé en ce qu'il comporte deux organes (14 et 15) d'arrêt des perturbations, le premier organe (14) étant situé en amont de ladite portion (11) et comportant trois groupes mobiles (16a, 16b et 16c), chacun de ces groupes coopérant avec un groupe fixe (18a, 18b et 18c) et le second organe (15) étant situé en aval de ladite portion et comportant deux groupes mobiles (17a et 17b), chacun de ces groupes coopérant avec un groupe fixe (19a et 19b).

## Claims

1. A device designed to maintain roughly stable flow conditions in a part of a polyphasic flow, characterized in that it consists of two disturbance prevention devices (12 and 13) suitable for stopping disturbances in the flow originating upstream and/or downstream, the said devices (12 and 13) being disposed in the flow of the said part (11).

2. Device according to claim 1, characterized in that at least one of the said disturbance preventing devices (12 or 13) comprises at least one static element such as a grate or diaphragm.

3. Device according to claim 1, characterized in that at least one of the said disturbance prevention devices (12 or 13) comprises at least one rotating element (16a, 16b, 16c).

4. Device according to claim 3, characterized in that the said rotating element comprises blades (16a, 16b, 16c).

5. Device according to one of the claims 3 or 4, characterized in that the said rotating element (16a, 16b, 16c) cooperates with the static elements (18a, 18b, 18c).

6. Device according to claim 5, characterized in that the said static element comprises blades (18a, 18b, 18c).

7. Device according to one of claims 3 to 6, characterized in that the said device for stopping disturbances (14 or 15) comprises several rotating elements (16a, 16b, 16c or 17a, 17b), each of these possibly cooperating with at least one static element (18a, 18b, 18c or 19a, 19b), such as a rectifier.

8. Device according to one of the previous claims, characterized in that at least one the said disturbance prevention devices (10, 12, 13, 14 or 15) is adopted so as to produce a polyphasic flow with a pre-determined structure.

9. Device according to claim 7, characterized in that the disturbance prevention device (15) comprises at least two mobile units (17a, 17b) each comprising at least one blade (17a, 17b), and each mobile unit cooperating with a fixed unit (19a, 19b) and forming the rectifier.

10. Device according to claim 9, characterized in that it comprises two disturbance prevention devices (14 and 15), the first device (14) situated upstream of the said part (11) and comprising three mobiles units (16a, 16b and 16c), each of these units cooperating with a fixed unit (18a, 18b and 18c) and the second device being situated downstream of the said part and comprising two mobile units (17a and 17b), each of these units cooperating with a fixed unit (19a and 19b).

## Patentansprüche

1. Vorrichtung, um die Strömungsbedingungen in einem Teil (11) einer polyphasischen Strömung im wesentlichen stabil zu halten, dadurch gekennzeichnet, daß sie wenigstens zwei Organe (12 und 13) umfaßt, die so ausgelegt sind, daß sie eventuelle Störungen in der Strömung unterbinden, welche von vor und/oder hinter ihm stammen, wobei diese Organe (12 und 13) in der Strömung zu beiden Seiten dieses Teils (11) angeordnet sind.

2. Vorrichtung nach Anspruch 1, dadurch gekennzeichnet, daß wenigstens eines dieser Organe (12 oder 13) zur Unterbindung von Störungen wenigstens ein statisches Element wie ein Gitter oder eine Membran umfaßt.

3. Vorrichtung nach Anspruch 1, dadurch gekennzeichnet, daß wenigstens eines dieser Organe (12 oder 13) zur Unterbindung der Störungen wenigstens ein sich drehendes Element (16a, 16b, 16c) umfaßt.

4. Vorrichtung nach Anspruch 3, dadurch gekennzeichnet, daß dieses sich drehende Element Schaufeln (16a, 16b, 16c) aufweist.

5. Vorrichtung nach einem der Ansprüche 3 oder 4, dadurch gekennzeichnet, daß dieses sich drehende Organ (16a, 16b, 16c) mit statischen Elementen (18a, 18b, 18c) zusammenwirkt.

6. Vorrichtung nach Anspruch 5, dadurch gekennzeichnet, daß dieses statische Element Schaufeln (18a, 18b, 18c) aufweist.

7. Vorrichtung nach einem der Ansprüche 3 bis 6, dadurch gekennzeichnet, daß das Organ zur Unterbindung von Störungen (14 oder 15) mehrere sich drehende Elemente (16a, 16b, 16c oder 17a, 17b) umfaßt, von denen jedes gegebenenfalls mit wenigstens einem statischen Element (18a, 18b, 18c oder 19a, 19b), beispielsweise einem Gleichrichter, zusammenwirkt.

8. Vorrichtung nach einem der vorhergehenden Ansprüche, dadurch gekennzeichnet, daß wenigstens eines dieser Organe (10, 12, 13, 14 oder 15) zur Unterbindung der Störungen so ausgebildet ist, daß eine polyphasische Strömung mit vorbestimmter Struktur (6, 7 oder 8) erzeugt wird.

9. Vorrichtung nach Anspruch 7, dadurch gekennzeichnet, daß dieses Organ (15) zur Unterbindung von Störungen wenigstens zwei bewegliche Gruppen (17a, 17b) mit je wenigstens einer Schaufel (17a, 17b) umfaßt, wobei jede bewegliche Gruppe mit einer festen Gruppe (19a, 19b) mit wenigstens einer Schaufel (19a, 19b) zusammenwirkt und einen Gleichrichter bildet.

10. Vorrichtung nach Anspruch 9, dadurch gekennzeichnet, daß sie zwei Organe (14 und 15) zur Unterbindung von Störungen umfaßt, wobei das erste Organ (14) in Strömungsrichtung vor diesem Teil (11) angeordnet ist und drei bewegliche Gruppen (16a, 16b und 16c) umfaßt, wobei jede dieser Gruppen mit einer festen Gruppe (18a, 18b und 18c) zusammenwirkt und das zweite Organ (15) in Strömungsrichtung hinter diesem Teil sich befindet und zwei bewegliche Gruppen (17a und 17b) umfaßt, wobei jede dieser Gruppen mit einer festen Gruppe (19a und 19b) zusammenwirkt.

0 140 743

**FIG.1**

**FIG.2**

**FIG.3**

**FIG.4**

**FIG.5**

1